# EUROPÄISCHE PATENTANMELDUNG

(11) **EP 2 706 495 A1**
(43) Veröffentlichungstag der Anmeldung: **12.03.2014**
(21) Anmeldenummer: 12183126.7
(22) Anmeldetag: 05.09.2012
(51) Int. Cl.: G06Q 20/04, G06Q 20/32, G06Q 20/34, G06Q 50/30, G07B 15/02

(54) **Referenzempfänger für Aufwecksignal bei E-Ticketing-Systemen**

(71) Anmelder: Siemens Schweiz AG, 8047 Zürich (CH); Siemens Aktiengesellschaft, 80333 München (DE)
(72) Erfinder: Kalbermatter, Marcel, 3940 Steg (CH); Eberhardt, Uwe, 81539 München (DE); Glänzer, Martin, 81827 München (DE); Roskosch, Richard, 85521 Ottobrunn (DE)
(74) Vertreter: Kley, Hansjörg

(57) **Zusammenfassung**

Zum gesicherten Aufwecken von e-Tickets (10) in einem Verkehrsmittel (30) wird ein Verfahren und System vorgeschlagen, dass folgende Komponenten enthält: Im Verkehrsmittel (30) sind nach dem Stand der Technik ein Aufwecksender (25) und Antennen (26) angeordnet. Zum sicheren Aufwecken ist zusätzlich mindestens ein Referenzempfänger (28) angeordnet, der die Wecksignale (41) registriert und abhängig von deren Vorhandensein und/oder Authentizität eine Meldung (40) an eine weitere Einheit (20) im Verkehrsmittel (30) veranlasst.

## Beschreibung

Die vorliegende Erfindung bezieht sich auf ein Verfahren und ein System zur Überwachung des Aufweckvorganges eines e-Tickets gemäss dem Patentanspruch 1 bzw. Patentanspruch 9.

Die generelle Funktionalität und die Anforderungen an ein e-Ticketing-System in einem Fahrzeug des öffentlichen Verkehrs kann beispielsweise den in [1] bis [4] angegebenen Quellen entnommen werden. Elektronische Billette bzw. elektronische Fahrscheine sind auch unter dem Begriff e-Tickets bekannt. Im Folgenden werden die vorgenannten zwei Begriffe kurz unter e-Ticket subsumiert. Ebenso werden Fahrzeuge des OeV - wie auch Kursschiffe - unter dem Begriff (öffentliches) Verkehrsmittel subsumiert.

Es werden im wesentlichen zwei verschiedene Ticketing-Systeme unterschieden:

### CiCo Check-in/Check-Out

Ein Fahrgast hält bewusst beim Betreten und beim Verlassen des Verkehrsmittels bzw. des Bahnsteig-Bereichs sein Billett kurz vor eines der zum Abrechnungssystem gehörenden Lesegeräte, korrekterweise «Sende-/Empfangseinheiten». Die Abfrage des Billetts - im folgenden stets e-Ticket genannt - erfolgt durch eine Nahdistanz-Funkverbindung, wie z.B.
- Proximity, ISO/IEC 14443,
   Reichweite bis 10cm;
- Vincinity, ISO/IEC 15693, 13.56MHz;
   Reichweite 1 - 1.5m.

### BiBo Be-in/Be Out

Bei komfortableren Systemen ist es nur noch nötig, dass der Fahrgast sein elektronisches Billett auf sich trägt: Das Billett wird per Funk innerhalb der befahrenen Streckenabschnitte automatisch von den in den Wagen installierten Leseeinheiten erfasst und die so gewonnenen Daten einem automatischen Abrechnungssystem zugeführt. Eine Interaktion des Benutzers ist nicht mehr notwendig. Es braucht auch keinen Check-Out-Vorgang. Somit lässt sich der Fahrgastfluss erheblich beschleunigen, insbesondere beim gleichzeitigen Ein-/Aussteigen der Passagiere.

Aus der Schrift EP 1 201 693 B1 [1] ist ein Verfahren und ein System zur Erfassung von elektronischen Billette (= e-Ticket) bekannt. Dem in der Schrift [1] offenbarten System liegt folgende Funktionalität zugrunde:
Aus Gründen der Autonomie befinden sich die Billette in einem Schlafzustand. Beim Eintritt in ein Verkehrsmittel werden die E-Tickets durch ein Nahfeld, z.B. 6.78Mhz geweckt und unidirektional mit einer ID sowie einer Timing Information «gestempelt». Die ID bezieht sich auf den im Eingangsbereich befindlichen Wecksender und die Timing Information auf Beginn und Intervall einer bidirektionalen Kommunikation zwischen e-Ticket und einer im Wagen befindlichen Sende- und Empfangseinheit.

Beim Systemansatz gemäss dem Stand der Technik in [1] wird also das e-Ticket beim Durchlaufen des Eingangsbereichs in einem Wagen über HF-Signale von dort installierten Antennen «aufgeweckt». Vorstehend ist mit dem Begriff «gestempelt» mehr als nur das «Aufwecken» subsumiert.

Die eigentliche Kommunikation zwischen dem e-Ticket und den im Wagen installierten Sende-/Empfangseinheiten zur Erfassung und späteren Abrechnung der Fahrt findet erst etwas später statt, wenn die Türen geschlossen sind und die Fahrt begonnen hat. Dieser Systemansatz bringt einige Vorteile mit sich; vor allem lässt sich so die mittlere Stromaufnahme der elektronischen Fahrscheine reduzieren und eine rudimentäre Bereichsabgrenzung «innerhalb oder außerhalb des Verkehrsmittels» erzielen.

Fahrgäste mit unlauteren Absichten könnten beim vorgestellten komfortablen Erfassungs- und Abrechnungssystem versuchen, mit Hilfe eines Störsenders das Aufwecken von elektronischen Fahrscheinen, also von e-Tickets, zu verhindern. Gelingt ihnen dies, so würde eine größere Anzahl e-Tickets im Umfeld nicht korrekt vom Erfassungssystem registriert werden, wodurch ein «unrechtmäßiger Passagier» bei einer Kontrolle nicht auffällig werden würde. Mit einem Störsender könnte sogar ein ganzes Kollektiv von Passagieren nicht korrekt erfasst werden, so dass dieses Kollektiv ein technisches Problem zur Nichtregistrierung vorschieben könnte.

Die oben beschriebene Problemstellung erscheint beim oben beschriebenen komfortableren Erfassungs-/Abrechnungssystem als besonders brisant, denn mit Hilfe der beschriebenen Manipulationsmethode können (auch bei Kontrollen) unentdeckt Fahrten ohne entsprechende Abrechnung durchgeführt werden. Das versteckte Mitbringen eines Störsenders und dessen Betrieb kann nicht unterbunden werden.

Gesucht wird also eine Erweiterung des oben beschriebenen Systemansatzes, um derartige Manipulationen unterbinden zu können.

Der vorliegenden Erfindung liegt daher die Aufgabe zugrunde, ein System und ein Verfahren zur Registrierung von e-Tickets anzugeben, welches System und ein Verfahren das Aufwecken der e-Tickets überwacht und Manipulationen mittels Störsender entdeckt und signalisiert.

Diese Aufgabe wird durch die in den unabhängigen Patentansprüchen angegebenen Massnahmen gelöst. Vorteilhafte Ausgestaltungen der Erfindung sind in weiteren Ansprüchen angegeben.

So können sich die folgenden Vorteile zusätzlich ergeben:
i) Der Referenzempfänger kann je nach Konfiguration folgende Fälle feststellen und an eine andere Einheit in einem Verkehrsmittel melden:
   - Ausbleiben des Wecksignals;
   - Feststellen eines nicht authentischen Wecksignals, z.B. durch mitgebrachte Störsender;
   - Vorhandensein eines regulären Wecksignals.
ii) Die von der anderen Einheit empfangenen Meldungen können einem Plausibilitätstest unterzogen werden und können auch für Wartungszwecke der Aufwecksender verwendet werden.
iii) Die Referenzempfänger können auch batteriegetrieben ausgebildet sein.
iv) Die von den Referenzempfängern weitergeleiteten Meldungen können weitere Angaben wie Wagennummer, Eingangsbereichs-ID etc. für eine gezieltere Analyse der Funktion des Aufweckens beinhalten.

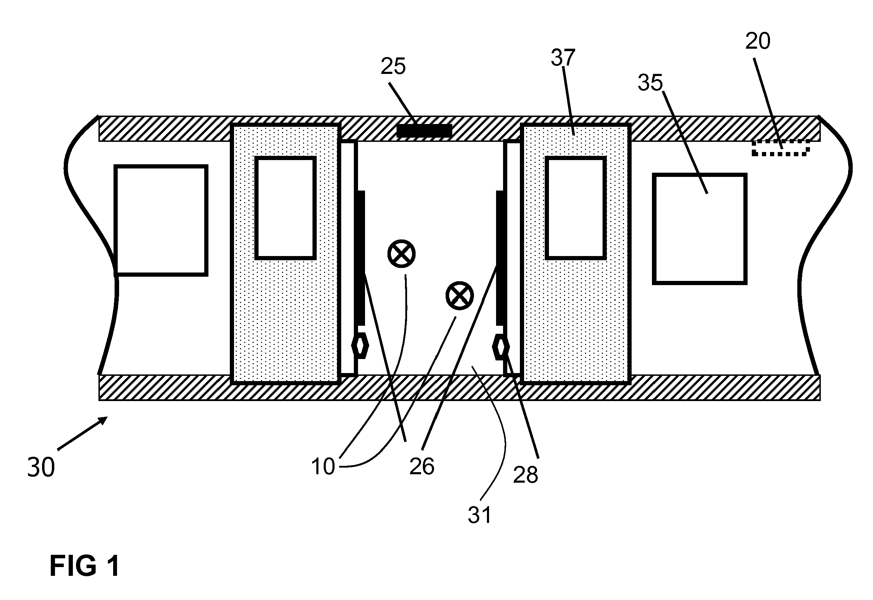

Die Erfindung wird nachfolgend anhand der Zeichnung beispielsweise näher erläutert. Dabei zeigen:
Figur 1
   Anordnung von Aufwecksender, zugehörigem Spulensystem und Referenzempfänger im Eingangsbereich eines Eisenbahnwagens;
Figur 2
   Detaillierte Ausschnitt aus der Darstellung gemäss der Figur 1, wobei Spulensystem für den Aufwecksender und der Referenzempfänger in einem einzigen Gehäuse integriert sind;
Figur 3
   Beispiel eines Blockschaltbildes für einen Referenzempfänger.

Figur 1 zeigt einen Eisenbahnwagen 30 mit Fenstern 35 und einem Eingangsbereich 31 als Beispiel eines Verkehrsmittels 30. Symbolisch sind zwei e-Tickets 10 dargestellt, in der Realität sind zu einem bestimmten Zeitpunkt eine grössere Zahl von e-Tickets im Eingangsbereich 31 vorhanden, die jeweils einem Träger bzw. Fahrgast wie Menschen, Hunde oder Gepäckstücke zuzuordnen sind. Während der Fahrt ist dieser Eingangsbereich 31 nach aussen hin mit einer Tür 37 - hier im Beispiel gemäss der Figur 1 einer Schiebetüre 37 - geschlossen. Das Aufwecken der e-Tickets 10 geschieht in diesem Beispiel mit einem seitlich im Eingangsbereich 31 angebrachten Antennen 26, die beispielsweise als Spulensystem 26 ausgebildet sind. Die Elektronik 25 für den Aufwecksender ist hierbei unter einer Abdeckung über einem Eingangsbereich 31 des Eisenbahnwagens 30 installiert. Die zum Aufwecksystem 26 gehörenden Antennen 26 befinden sich - in flache Gehäuse eingebaut - links und rechts einander gegenüberstehend an den Seitenwänden des Eingangsbereichs 31. Aufwecksender und zugehörige Antennen sind aus dem einschlägigen Stand der Technik bekannt.

Unterhalb der Antennen 26 sind, vorzugsweise ebenfalls in die flachen Gehäuse eingebaut, noch Referenzempfänger 28 angeordnet. Die Referenzempfänger 28 werten das jeweils von der gegenüberliegenden Antenne abgestrahlte Signal aus und geben eine Rückmeldung an die Elektronik 26 oder an eine weitere die Erfassung der e-Tickets im Eisenbahnwagen steuernde Einheit, ob ein gültiger Aufweckvorgang stattgefunden hat. Vorzugsweise handelt es sich bei dieser Einheit um eine Sende-/Empfangseinheit 20. Der Referenzempfänger 28 kann sich im selben Gehäuse wie die Sendeantennen 26 befinden. Dies ergibt die Möglichkeit, die Referenzempfänger 28 über Signalleitungen anzuschließen oder wahlweise die Übertragung der Meldungen per Funk vorzunehmen.

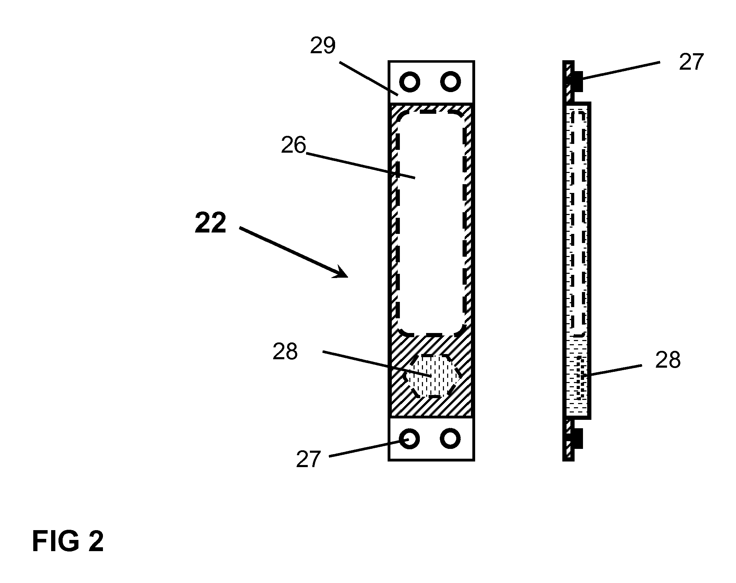

Figur 2 zeigt eine mögliche Anordnung und konstruktive Gestaltung der beschriebenen Komponenten Antenne 26 und Referenzempfänger 28 in einem flachen Gehäuse 22, das auf einfache Art seitlich im Eingangsbereich montiert werden kann. Dazu sind eine Lasche 29 und Bohrlöcher 27 für Befestigungsschrauben vorgesehen.

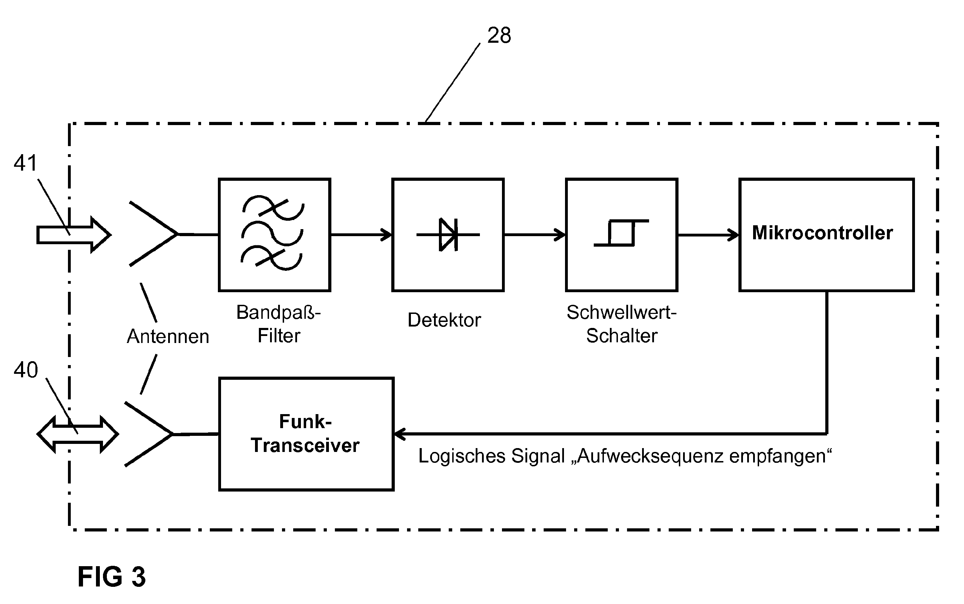

Anhand der Figur 3 wird ein Blockschaltbild eines Referenzempfängers 28 erläutert. Das von der oberen Antenne aufgefangene, im vorliegenden Fall Aufwecksignal 41 (hier: AM-Modulation) wird über ein Bandpassfilter geführt, um unerwünschte Einstreuungen aus benachbarten Frequenzbändern zu unterdrücken, anschließend gleichgerichtet (Demodulation) und auf einen Schwellwertschalter geführt. Dessen Ausgangssignal (Logik-Pegel) wird einem Mikrocontroller zugeführt, der den eingehenden Bitstrom mit einem vorgegebenen Bitmuster vergleicht. Im Falle einer Übereinstimmung wird ein logisches Signal «Aufwecksequenz empfangen» auf «1» gesetzt und der dargestellte Funktransceiver setzt über die untere Antenne eine entsprechende Meldung 40 per Funk ab. Die Meldung wird beispielsweise von einer innen an der Wagendecke montierten Sende-/Empfangseinheit 20 empfangen und weiterverarbeitet. Anstelle einer Funkübermittlung kann die Meldung auch über eine physische Leitung der Sende-/Empfangseinheit 20 zugeführt werden. Dieses Prinzip kann in verschiedenen Ausprägungen implementiert werden:

1. Fall Übereinstimmung des empfangenen Wecksignals 41 mit einem gespeicherten Bitmuster oder mit einem per Draht empfangenen Wecksignal:
Es wird keine Meldung abgesetzt.

2. Fall Ausbleiben eines Wecksignals:
Wenn das Wecksignal 41 wie Fall 1 zusätzlich über eine Drahtverbindung dem Referenzempfänger zugeführt wird, kann auch ein Ausbleiben eines Wecksignals 41 an eine Einheit im Verkehrsmittel absetzt werden.

3. Fall Empfangen eines nicht authentischen Wecksignals:
Dieser Fall entspricht dem oben geschilderten Fall, wo der Mikroprozessor einen Vergleich mit einem gespeicherten Muster oder mit einem über eine Drahtverbindung übermittelten Wecksignal (41) vorgenommen wird.

Die Meldungen 40 haben vorteilhafterweise eine Struktur mit den Inhalten in der nachfolgenden Tabelle 1.

**Tabelle: Mögliche Struktur der Meldung 40**

| |
|---|
| : |
| Id Wecksender |
| Id Referenzempfänger |
| Datum/Zeit |
| Cause |
| ID Fahrzeug |
| : |

Das Feld cause kann die Werteausprägungen haben
- received, equal
- received, not equal bzw. non authentic
- not received.
Aus der Id Wecksender oder Id Referenzempfänger kann auf die Id Fahrzeug des betreffenden Verkehrsmittels 30 geschlossen werden.

Die Differenzierung mit den drei Fällen ergibt sich je nach dem betrieblichen Einsatz und dem Kollisionsmanagement. Die Angaben in der Tabelle 1 sind alternativ oder kumulativ. Für den Fall, wo die Referenzempfänger 28 als Teil des Interieurs vorgesehen sind, wird die Id Fahrzeug nicht übermittelt, es sei denn, dass beim Einbau diese Referenzempfänger 28 besonders noch konfiguriert werden.

Wurde die Aussendung eines Aufwecksignals 41 initiiert, bleibt jedoch die Rückmeldung von einem oder einigen Referenzempfängern 28 aus, so wird eine entsprechende Meldung 40 an das übergeordnete System, z.B. Sende-/Empfangseinheit 20 abgegeben. Die vorgenannte Rückmeldung kann weiter im empfangenden System, z.B. der Sende-/Empfangseinheit 20 dahin ausgewertet werden, dass für eine weitere Meldung nach aussen wenigstens zwei Meldungen 40 übereinstimmen müssen, dies als sogenannte Plausibilitätsprüfung. Zusätzlich kann auch noch eine Warnmeldung im Führerstand für den Lokomotivführer abgegeben werden. Denkbar ist auch eine Meldung an die Bahnpolizei bzw. Transportpolizei mit Angabe des Zuges (Kurs) und des Wagens; Transportpolizei, Bahnpolizei oder Führerstand werden hier zusammenfassend als Aufsichtsstelle bezeichnet.

Nachfolgend werden weitere besonders vorteilhafte Ausführungsformen der Erfindung angegeben.

Die Referenzempfänger 28 werden (ähnlich zum in Figur 3 dargestellten Blockschaltbild) als eigenständige, batteriebetriebene Einheiten ausgeführt. Diese sind an mehreren verschiedenen Stellen im Eingangsbereich 31 eines Verkehrsmittels 30 angeordnet. Dies ist besonders dann vorteilhaft, wenn der Eingangsbereich 31 relativ gross ist und ein grosser Strom von Trägern wie Menschen und Hunden aller Grössen von e-Tickets 10 so erfasst werden soll, dass möglichst alle e-Tickets 10 geweckt werden und Störungen sicher erkannt werden. Für diese Ausführungsform werden die Meldungen 40 vorzugsweise per Funk an die unterhalb oder an der Wagendecke installierten Sende-/Empfangseinheit(en) 20 übermittelt.

Die vorgenannten Referenzempfänger 28 als eigenständige, batteriebetriebene Einheiten werden in die Teile des Interieurs eines Wagens vorgängig eingebaut. Dies ermöglicht eine verdeckte und kostengünstige Integration. Die Referenzempfänger 28 könnten dann turnusmäßig zusammen mit Interieurteilen erneuert werden.

Diese Lösung erlaubt auch eine Funktionskontrolle der involvierten Komponenten. Die Ergebnisse dieser Funktionskontrolle können in einem Log-File (fahrzeugspezifisch) festgehalten werden.

Die Referenzempfänger 28 können drahtgebunden über einen Anschluss an die Antenneneinheiten 26, den Aufwecksender 25 oder andere Einrichtungen im Verkehrsmittel 30 mit elektrischer Energie zum Betrieb versorgt werden. Alternativ können die Referenzempfänger 28 über eingebaute Batterien oder Akkus mit elektrischer Energie versorgt werden.

### Liste der Bezugszeichen, Glossar

- 10: e-Ticket
- 20: Sende-/Empfangseinheit
- 25: Elektronik für Aufwecksender; Aufwecksender
- 26: Spulensystem für Aufwecksender; Antennen
- 27: Bohrung für Befestigungsschraube
- 28: Referenzempfänger
- 29: Lasche zur Befestigung im Türbereich
- 30: Verkehrsmittel; Eisenbahnwagen, Schiff, Bus; Fahrzeug
- 31: Eingangsbereich
- 35: Fenster
- 37: Türe
- 40: Funksignal zur Datenkommunikation zwischen Referenzempfänger(n) und Sende-/Empfangseinheit(en)
- 41: Aufwecksignal
- Id: Identität, N°
- OeV,: ÖV Öffentlicher Verkehr
- RF: Radiofrequenz
- RX: receiver, eigenständige Empfängerbausteine, die u.a. Informationen zum Empfangspegel liefern
- TX: transceiver, Sendebaustein
- UWB: Ultra Wide Band

### Liste der zitierten Dokumente

[1] EP 1 201 693 B1
   «Verfahren und System zur Registrierung von Billetten»
[2] «E-Ticketing»
   Siemens Schweiz AG, Industry Sector, Mobility Division, Rail Automation
   www.litra.ch/download.php?file=dcs/users/2/3 20110316 MF dt.pdf und
   http://www.litra.ch/dcs/users/2/3 20110316 MF dt.pdf
[3] «Inhalt und Struktur der Spezifikationen/Kundenschnittstelle und Zertifizierung in der VDV-Kernapplikation» Präsentation von Dipl.-Ing. Elke Fischer
   VDV-KERNAPPLIKATIONS GmbH & Co. KG
   http://www.eticket-deutschland.de/
[4] «Schlussbericht zum Teilprojekt AP 400
   Das intermobilPASS-System und das Pilotvorhaben ALLFA-Ticket im Verkehrsverbund Oberelbe»
   GWT-TUD GmbH; Chemnitzer Str. 48b, 01187 Dresden

## Patentansprüche

1. Verfahren zum gesicherten Aufwecken von e-Tickets (10) in einem Verkehrsmittel (30), wobei für das Aufwecken der e-Tickets (10) ein Aufwecksender (25) und zugehörige Antennen (26) vorgesehen sind, über die ein Wecksignal (41) in das Verkehrsmittel (30) abgegeben wird;
**dadurch gekennzeichnet, dass**
im Verkehrsmittel (30) Referenzempfänger (28) angeordnet sind, die das Vorhandensein eines Wecksignals (41) registrieren und im Falle eines empfangenen aber nicht authentischen Wecksignals (41) oder im Falle eines ausbleibenden Wecksignals (41) eine Meldung (40) an eine Einheit (20) im Verkehrsmittel (30) absetzen.

2. Verfahren nach Anspruch 1,
**dadurch gekennzeichnet, dass**
das Ausbleiben eines Wecksignals (41) aufgrund einer separat zum Referenzempfänger über eine Drahtverbindung übermittelten Wecksignals registriert wird.

3. Verfahren nach Anspruch 1 oder 2,
**dadurch gekennzeichnet, dass**
ein nicht authentisches Wecksignal (41) aufgrund eines im Referenzempfänger (28) gespeicherten Wecksignalmusters oder aufgrund einer separat zum Referenzempfänger (28) über eine Drahtverbindung übermittelten Wecksignals (41) registriert wird.

4. Verfahren nach einem der Ansprüche 1 bis 3,
**dadurch gekennzeichnet, dass**
von der Einheit (20) eine weitere Meldung an eine innerhalb oder ausserhalb des Verkehrmittels (30) befindliche Aufsichtsstelle abgesetzt wird.

5. Verfahren nach Anspruch 4,
**dadurch gekennzeichnet, dass**
vor Abgabe der weiteren Meldung eine Plausibilitätsprüfung der in der empfangenden Einheit (20) registrierten Meldungen (40) vorgenommen wird.

6. Verfahren nach Anspruch 5,
**dadurch gekennzeichnet, dass**
die Plausibilitätsprüfung darin besteht, dass die weitere Meldung nur abgegeben wird, wenn die empfangende Einheit (20) wenigstens zwei gleiche Meldungen (40) erhalten hat.

7. Verfahren nach einem der Ansprüche 1 bis 6,
**dadurch gekennzeichnet, dass**
die Meldung (40) an die Einheit (20) im Verkehrsmittel (30) folgende Angaben kumulativ oder alternativ enthält:
- Id des Referenzempfängers;
- Id des Aufwecksenders;
- Datum/Uhrzeit der Meldung.

8. Verfahren nach einem der Ansprüche 1 bis 7,
**dadurch gekennzeichnet, dass**
die Meldungen (40) in der Einheit (20) in einer Log-Datei festgeschrieben werden.

9. System zum gesicherten Aufwecken von e-Tickets (10) in einem Verkehrsmittel (30), wobei für das Aufwecken der e-Tickets (10) ein Aufwecksender (25) und zugehörige Antennen (26) im Verkehrsmittel (30) angeordnet sind, wobei vom Aufwecksender (25) und von den Antennen (26) ein Wecksignal (41) in das Verkehrsmittel (30) für das Wecken von e-Tickets abgegeben wird;
**dadurch gekennzeichnet, dass**
im Verkehrsmittel (30) Referenzempfänger (28) angeordnet sind, die das Vorhandensein eines Wecksignals (41) registrieren und im Falle eines empfangenen aber nicht authentischen Wecksignals (41) oder im Falle eines ausbleibenden Wecksignals (41) eine Meldung (40) an eine Einheit (20) im Verkehrsmittel (30) absetzen.

10. System nach Anspruch 9,
**dadurch gekennzeichnet, dass**
die Referenzempfänger (28) drahtgebunden über einen Anschluss an die Antenneneinheiten (26), den Aufwecksender (25) oder andere Einrichtungen im Verkehrsmittel (30) mit elektrischer Energie zum Betrieb versorgt werden.

11. System nach Anspruch 9,
**dadurch gekennzeichnet, dass**
die Referenzempfänger (28) über eingebaute Batterien oder Akkus mit elektrischer Energie versorgt werden.

12. System nach einem der Ansprüche 9 bis 11,
**dadurch gekennzeichnet, dass**
die Meldungen (40) von Referenzempfängern (28) an eine Einheit (20) über eine Funkschnittstelle übertragen werden.

13. System nach einem der Ansprüche 9 bis 11,
**dadurch gekennzeichnet, dass**
die Meldungen (40) von Referenzempfängern (28) an eine Einheit (20) über eine drahtgebundene Schnittstelle übertragen werden.

14. System nach einem der Ansprüche 9 bis 13,
**dadurch gekennzeichnet, dass**
die Referenzempfänger (28) in einem oder mehreren InterieurTeilen des Verkehrsmittels (30) eingebaut sind.
